# EUROPÄISCHE PATENTSCHRIFT

(11) **EP 0 575 294 B1**
(45) Veröffentlichungstag und Bekanntmachung des Hinweises auf die Patenterteilung: **03.11.1999**
(21) Anmeldenummer: 93810422.1
(22) Anmeldetag: 11.06.1993
(51) Int. Cl.: B01D 53/00, C02F 3/04

(54) **Verfahren und Vorrichtung zur biologischen Abluftreinigung**
Process and apparatus for the biological purification of exhaust air
Procédé et dispositif de purification biologique d'air d'échappement

(30) Priorität: 16.06.1992 CH 189992
(43) Veröffentlichungstag der Anmeldung: 22.12.1993
(73) Patentinhaber: LINDE BRV Biowaste Technologies AG, 6300 Zug (CH)
(72) Erfinder: Rindelaub, Frank, 2014 Bôle (NE) (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(56) Entgegenhaltungen:
- EP-A- 0 111 302
- EP-A- 0 142 872
- BE-A- 521 929
- DE-A- 3 709 269
- DE-A- 4 112 983
- FR-A- 1 557 776
- FR-A- 2 655 563
- US-A- 3 494 463
- US-A- 4 421 534

## Beschreibung

Die vorliegende Erfindung bezieht sich auf ein Verfahren zur Abluftreinigung mittels eines biologischen Abluftwäschers.

Abluftreinigung durch biologische Methöden, d. h. Bakterien, kann mittels sogenannter Biofiltertürme durchgeführt werden. Vorteilhaft ist in derartigen Anlagen der kontinuierliche Betrieb gegenüber Erdfiltern, die in regelmässigen Abständen gewartet werden müssen, wozu in der Regel dauernd nur 2/3 der Anlage benutzbar ist. In den Biofiltertürmen durchströmt die Abluft mehrere Schichten von aus der Klärtechnik bekannten, im Gegenstrom berieselten Tropfkörpern, auf denen sich der Bakterienrasen ausbildet. Derartige Biofiltertürme haben sich auch unter extremen Belastungen, wie in Tierkörperbeseitigungsanstalten, Kompostieranlagen nahe Wohnbaugebieten usw. insbesondere auch hinsichtlich der Geruchsminderung bewährt.

Bisher wurde die Berieselung mit reinem Wasser durchgeführt, wodurch im Betrieb mit stark unterschiedlich belasteten Abgasen die Nahrungsversorgung der Bakterien ebenfalls stark schwankte und bei plötzlichem Anstieg der Belastung die Reinigunswirkung ungenügend war. Da der Biofilterturm insgesamt ein recht träges System darstellt, ist ein Abfall der Wirksamkeit der Filterbetten über recht lange Zeit spürbar.

Aus der Schrift DE-A-3 709 269 ist ein derartiger Biofilterturm zur Abluftreinigung bekannt. Dieser Turm weist mehrere, etagenweise angeordnete Filterkammern auf, wobei die auf den frei wählbaren Filtermaterialien wachsenden Bakterien die vorbeiströmende Luft reinigen. Jeder Filterkammer ist eine Sprühvorrichtung zugeordnet, die die Filtermaterialien mit weitgehend sauberem, jedoch für das Bakterienwachstum mit Nährstoffen versehenem Wasser befeuchten. Ueberschüssiges Wasser tropft aus den Filterkammern in ein Auffangbecken, aus dem es bei Bedarf in ein Absitzbecken gepumpt wird. Die sich im Absitzbecken absetzenden Partikel werden einer Schlammpresse zugeführt, während das gereinigte Wasser in ein Vorratsbecken überläuft. Aus diesem wird wiederum das Wasser für die Sprühvorrichtungen entnommen. Ueberschüssiges Wasser läuft in die Kanalisation ab; mangelndes Wasser wird durch Frischwasser ab Leitung ersetzt. Die Filtermaterialien sind empfindlich gegen ungleichmässige und ungenügende Befeuchtung und neigen zum Verstopfen. Die zu reinigende Abluft muss daher vor dem Einblasen in den Turm zur Entfernung von Partikeln nass vorgereinigt werden. Auch das hierfür benutzte Wasser wird dem genannten Vorratsbecken entnommen bzw. in das Absitzbecken rückgeführt.

Ausgehend von dieser Schrift ist es die Aufgabe der Erfindung, eine wesentlich verbesserte und gebrauchsstabile Methode zur biologischen Abgasreinigung anzugeben. Diese Methode soll insbesondere auch unter stark schwankenden Belastungen eine konstante Wirkung der Abgasreinigung sicherstellen.

Die Lösung dieser Aufgabe wird durch die unabhängigen Ansprüche angegeben. Die abhängigen Ansprüche geben bevorzugte Ausführungen und Ausgestaltungen der Erfindung an.

Demgemäss wird dem Umlaufwasser des Biofilters mit biologisch abbaubaren Substanzen belastetes Wasser zugesetzt. Es kann sich dabei um Gülle, Sammelwasser aus Kompostieranlagen usw. handeln, also Abwässer aus anderen Anlagenteilen. Diese Abwässer enthalten meistens auch Festkörper, weswegen bevorzugt eine Vollkegeldüse mit grossen Öffnungen eingesetzt wird. Überraschenderweise werden durch die damit wesentlich gröbere Strahlverteilung keine Beeinträchtigungen der Filterwirkung beobachtet. Die Vorgabe belasteten Wassers erlaubt es auch, bei der Inbetriebnahme schnell die für das Bakterienwachstum optimale Konzentration an abbaubaren Stoffen in den Filterbetten einzustellen, sowie auch während des Betriebs entsprechende Korrekturen vorzunehmen.

Die dauernd optimal eingestellten Lebensbedingungen der abbauenden Bakterien bewirken auch eine hohe Aktivität der Bakterien, die in dem von Filterbett zu Filterbett tropfenförmig durchrieselnden Umlaufwasser enthalten sind. Die Tropfen weisen wegen ihrer grossen Oberfläche einen guten Kontakt zur Luft auf, so dass den aeroben Bakterien auch in dieser Hinsicht gute Lebensbedingungen geboten werden und in der Folge insbesondere an der Oberfläche eine hohe Abbauaktivität beobachtet wird.

Da der Biofilterturm netto mit der Abluft in der Regel Wasser verliert, reichern sich die gelösten Bestandteile, insbesondere Salze, im umlaufenden Wasser an und führen nach relativ kurzer Zeit zum Umkippen des biologischen Systems. Dies kann auf einfache Art durch das Abpumpen des Inhalts des Absitzbeckens unter dem Biofilterturm verhindert werden.

Ein weiterer grundsätzlicher Vorteil besteht darin, dass der Abbau in den Filterbetten des Turmsbevorzugt unter aeroben Bedingungen erfolgt, während im Absitzbecken bei genügend langer Verweildauer des Umlaufwassers anaerobe Bedingungen herrschen. Dadurch können sich im Turm nitrifizierende Bakterienstämme halten, während unter den anaeroben Bedingungen eine Denitrifizierung, also die Reduktion von Nitrat unter anderem zu Stickstoff, stattfinden kann.

Die Erfindung soll weiter anhand von Ausführungsbeispielen und Figuren veranschaulicht werden:
- Fig. 1: zeigt einen schematischen Schnitt durch eine erfindungsgemässe Anlage mit Biofilterturm, und
- fig. 2: einen Ausschnitt einer Variante der Ausführung gemäss Fig. 1.

Der Biofilterturm 1, im weiteren als Bioturm bezeichnet, dessen Wand 3 bevorzugt aus Holz gefertigt ist, enthält mehrere Filterbetten 8, die mit den aus der Klärtechnik bekannten Tropfkörpern gefüllt sind. Oben befindet sich der Abzug 20 mit dem Ventilator 22. Der Abzug kann für eine verbesserte Abluftverdünnung, wie abgebildet, als Venturirohr ausgebildet sein, bei dem zwischen Innenrohr 24, durch das die Abluft gemäss Pfeil 26 strömt, und Aussenrohr 25 zusätzlich Frischluft angesaugt wird, wie es die Pfeile 27 andeuten.

Unter dem Ventilator 22 ist die Vollkegeldüse 15 angeordnet. Bevorzugt wird eine Düsenkonstruktion mit relativ grossen Öffnungen grösser 5 mm, insbesondere grösser als 10 mm gewählt, die mit niedrigem Betriebsdruck arbeiten kann, um Betriebsstörungen durch Feststoffe zu vermeiden, die mit dem vorbelasteten Wasser in das System gelangen (Gülle), und um die für den Betrieb nötige Pumpleistung gering zu halten. Es ist dabei ein charakteristisches Merkmal des Bioturms, dass durch die getrennten Betten immer wieder eine Durchmischung des Betriebswassers erfolgt, wodurch Konzentrationsschwankungen durch ungleichmässige flächenbezogene Wirksamkeit immer wieder ausgeglichen werden.

Die Düse 15 ist über eine Steigleitung 28 mit der Pumpe 29 verbunden, die das Betriebswasser aus dem Pumpbecken 6 zur Düse 15 befördert. Das Absitzbecken 5 ist über einen Überlauf 10 mit dem Pumpbecken 6 verbunden. Der Überlauf 10, der hier als beweglicher Schlauch ausgeführt ist, kann mit dem Seilzug 11 auf verschiedene Ansaughöhen im Absitzbecken 5 eingestellt werden. Damit kann die Verweilzeit im Absitzbecken 5 eingestellt werden, da das Betriebswasser aus dem Bioturm 1 in das Absitzbecken 5 tropft und dort absinkt, wobei sich zunehmend anaerobe Bedingungen einstellen, bis es über den Überlauf 10 in das Pumpbecken 6 gelangt. Während der Verweilzeit im Pumpbecken 6 nimmt die Anaerobizität weiter zu.

Vorteilhaft ist die Verweildauer so gewählt, dass spätestens an der Ansaugöffnung der Pumpe 29 anaerobe Bedingungen herrschen. Die Dauer bis zum Erreichen anaerober Bedingungen kann jedoch durch gängige Methoden wie z. B. Einblasen von CO₂ verkürzt werden. Mit der richtig gewählten Ansaughöhe wird auch die richtige Zusammensetzung des Überlaufwassers für die weitere Zersetzung im Pumpbecken 6 eingestellt: ist der Einlauf, d. h. die Ansaugöffnung, des Überlaufs zu weit abgesenkt, so wird stark mit abgesetztem Material angereichertes Wasser übergehen, was einerseits dem Absetzeffekt zuwiderläuft und andererseits auch zum Verstopfen der Anlage führen kann. Bei zu hoch eingestelltem Einlauf wird noch stark mit absitzfähigem Material angereichertes Wasser überlaufen, das zudem noch eine hohe Aerobizität aufweist.

Die Gesamtdurchlaufzeit des Betriebswassers bis zum Erreichen der Pumpe 29 wird schliesslich durch die Gesamtmenge an Betriebswasser, also etwa den Pegel im Pumpbecken 6, eingestellt. Dieser Pegel, und damit die Menge an Betriebswasser, wird bevorzugt über eine Regelung auf konstantem Niveau gehalten. Dazu wird aus dem Vorratsbecken 7 im einfachsten Fall kontinuierlich belastetes Wasser mittels der Pumpe 30 dem Betriebswasserkreislauf über eine nicht dargestellte Leitung zugeführt. Im Falle zu grossen Wasseraustrags durch die Abluft muss jedoch auch eine Möglichkeit zur Frischwasserzugabe bestehen. Sie kann durch eine nicht dargestellte, in eines der Becken 5, 6 oder 7 mündende Wasserleitung realisiert werden. Im anderen Fall, wenn die zu reinigende Abluft eine hohe Feuchtigkeit aufweist, kann der Fall eintreten, dass der Wassereintrag in das System grösser ist als der Wasseraustrag mit der Abluft, wodurch die Betriebswassermenge ansteigt. Für diesen Fall ist vorgesehen, Betriebswasser in das Vorratsbecken 30 zurückzupumpen bzw. über eine ventilgesteuerte Abzweigung an der Steigleitung dahin abzuleiten.

Die Kontrolle der optimalen Betriebsbedingungen kann durch die zwischen den Filterbecken und über dem Absitzbecken angebrachten Kontrollöffnungen 9 erfolgen. Ein bräunlich, schäumend ablaufendes Betriebswasser ist in der Regel als Kennzeichen für gute Betriebsbedingungen zu werten. Ein weiteres Kriterium für den Betriebszustand der Anlage ist die Luftdruckverteilung im Turm 1, die z. B. durch Druckmessgeräte gemessen werden kann, die nicht dargestellt sind und den Druckabfall über den gesamten Turm oder auch von Filterbett zu Filterbett bestimmen. Ist der Bakterienrasen auf den Filterbecken zu dick geworden, steigt der Luftwiderstand der Filterbetten 8 an, und ein höherer Druckabfall stellt sich ein. Dem kann z. B. durch Zusatz von Frischwasser anstelle von belastetem Wasser entgegengewirkt werden. Im umgekehrten Fall ist es nötig, wieder belastetes Wasser zuzuführen. Andere Regelmöglichkeiten sind in der Technik bekannt und bedürfen keiner weiteren Erläuterung, wie z. B. andere Umlaufgeschwindigkeiten des Betriebswassers.

Mit einem verstärkten Durchsatz an Betriebswasser durch den Bioturm 1 kann auch einer zu hohen Aktivität durch Abspülen von den Tropfkörpern entgegengewirkt werden, entsprechend kann durch verminderte Geschwindigkeit das Wachstum wieder gefördert werden. Mit der Verweildauer der Abluft im Turm und der Gesamtmenge an Betriebswasser sowie der Durchlaufgeschwindigkeit kann der Übergang der in der Abluft enthaltenen Stoffe gesteuert werden, wobei diese nicht unbedingt in einem Durchlauf zersetzt werden müssen, sondern auch zum Teil im Betriebswasser gespeichert bleiben können und im Lauf der nächsten Umläufe abgebaut werden. Dabei ist noch als weiterer Parameter auf eine ausreichende Verweilzeit im Absitzbecken 5 zu achten, die auch durch den beweglichen Überlauf 10 eingestellt werden kann. Eine Mindestgesamtverweilzeit in Absitz- und Pumpbecken kann durch die Vorgabe eines Minimalpegels im Pumpbecken 6 sichergestellt werden, z. B. durch eine Schwimmerregler. Da die Anlage langfristig über die abgegebene Abluft immer Wasser verliert, genügt in der Regel die regulierte Zuführung von Wasser.

Die Pumpe 32 im Absitzbecken dient dazu, den abgesetzten Schlamm und gleichzeitig auch im Betriebswasser angereicherte Salze und andere Stoffe abzupumpen. Da wegen der hohen Verdunstungsleistung der Anlage immer Wasser zugeführt werden muss, reichern sich besonders Salze immer mehr im umlaufenden Wasser an und führen schliesslich zum Umkippen des biologischen Reinigungssystems. Dies wird durch rechtzeitiges Abpumpen aus dem Absitzbecken 5 vermieden.

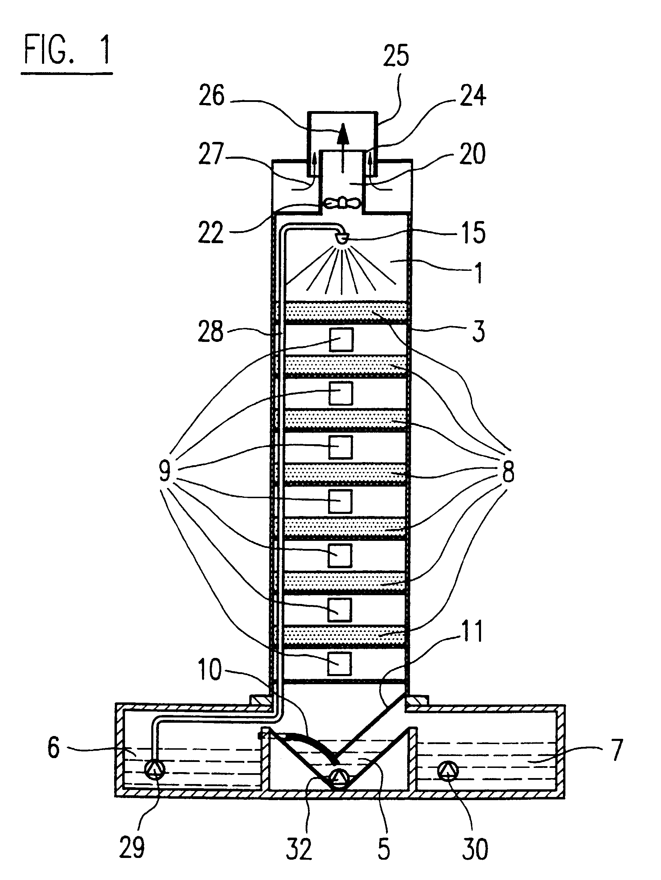

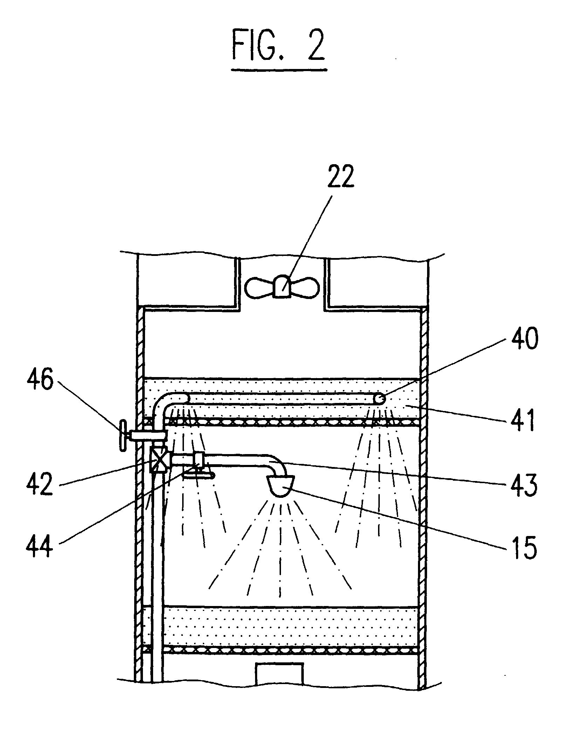

Fig. 2 zeigt eine bevorzugte Ausführung im Bereich des obersten Filterbetts 41. Bei heftigem Luftstrom im Filterturm 1 gemäss Fig. 1 kann es vorkommen, dass Wassertröpfchen aus dem Sprühwasserkegel der Düse 15 herausgerissen und mit der Abluft ausgeblasen werden. Zur Vermeidung dieses Effekts kann die Düse 15 daher unter dem obersten Filterbett 41 angebracht werden, und zwar bevorzugt möglichst knapp darunter, um den Abstand zwischen den beiden obersten Betten möglichst klein zu halten. Die Düse 15 wird aus der Steigleitung 28 über ein T-Stück 42 und eine Abzweigung 43 versorgt. Der Zufluss wird über ein Ventil 44 gesteuert. Das Filterbett 41 wirkt damit als Filter gegen mitgerissene Wassertröpfchen. Zusätzlich ist in diesem Filterbett eine Ringleitung 40 vorhanden, in die die Steigleitung 28 mündet. Auch hier kann der Zufluss über ein Ventil 46 gesteuert werden.

Aus der gelochten Ringleitung 40 austretendes Wasser durchdringt einen bestimmten Bereich am Rand des Filterbetts 41, wodurch dieses auch bereits zur Abluftfilterung beiträgt. Das von dem Filterbett 41 auf das nächste Filterbett 8 herabtropfende Wasser versorgt dessen Rand, und der Sprühkegel der Düse 15 kann enger ausgelegt werden, da er nicht mehr die gesamte Fläche des Filterbetts 8 erfassen muss. Eine beispielhafte Verteilung ist 1:2, d. h. die Düse 15 besprüht ca. 2/3 der Filterbettfläche, und das vom Filterbett 41 herabtropfende Wasser deckt das restliche Drittel am Rand des Filterbetts ab.

Die Zufuhr der zu reinigenden Luft kann wie in bekannten Ausführungen derartiger Abluftfiltertürme an einer beliebigen Stelle unterhalb des Turms erfolgen, z. B. auch am Fuss des Turms oder über dem Absitzbecken. Bevorzugt erfolgt die Einleitung durch die Decke über dem Pumpbecken, wodurch sich in der Abluft enthaltene Feststoffe auf dem Betriebswasser niederschlagen können und sich eine relativ gleichmässige Verteilung des Luftstroms bis zu dessen Eintritt in den Turm einstellt. Bei Einleitung näher am Turm, z. B. direkt am Fuss, sind oft noch zusätzliche Massnahmen zu treffen, um den Luftstrom gleichmässig über den Turmquerschnitt zu verteilen. Auch derartige Massnahmen sind aus bekannten Filtertürmen bekannt und bedürfen daher keiner weiteren Erläuterung.

Unter bestimmten Bedingungen kann es noch erforderlich sein, die einströmende Abluft zu temperieren, wozu ein Wärmetauscher unter dem Bioturm angebracht werden kann. Es kann auch vorteilhaft sein, das aus dem Pumpbecken abgepumpte Wasser zu temperieren, z. B. durch eine Heiz- oder Kühlschlange, die vorteilhaft in der Nähe der Ansaugöffnung der Pumpe 29 angeordnet ist. Der bewegliche Überlauf 10 kann auch als teleskopartig verlängerbares Rohr ausgeführt sein.

## Patentansprüche

1. Biofilterturm (1) zur biologischen Abluftreinigung mit im Kreislauf geführtem Betriebswasser,
mit mehreren etagenweise angeordneten Filterbetten (8, 41) als Träger von Bakterienwuchs, welche Betten von der zu reinigenden Luft nacheinander von unten nach oben durchströmt werden,
mit einem Pumpbecken (6), einer Förderpumpe (29), einer Steigleitung (28) und einer Sprühvorrichtung zum Überführen und breitflächigen Ausbringen des Betriebswassers aus dem Pumpbecken (6) in den Turm (1),
mit einem Auffangbecken für das durch den Turm tropfende Betriebswasser am unteren Ende des Turms (1),
mit einem Absitzbecken zum Absondern und Abpumpen von im Betriebswasser enthaltenen Partikeln,
mit einem Überlauf für das Betriebswasser aus dem Absitzbecken in das Pumpbecken (6), und
mit einem Frischwasser-Zulauf zum Ersetzen von aus dem Kreislauf entwichenem Betriebswasser,
wobei im Betriebswasser Nährstoffe enthalten sind, um für den Bakterienwuchs jederzeit geeignete Betriebsbedingungen zu gewährleisten,
dadurch gekennzeichnet,
dass die Filterbetten (8, 41) einheitlich mit Tropfkörpern gefüllt sind und durch zugeordnete Leerräume voneinander beabstandet sind, deren Höhe grösser ist als die Dicke der gefüllten Filterbetten (8, 41), wobei auf den Tropfkörpern ein Bakterienrasen aufwachsbar ist,
dass das Auffangbecken und das Absitzbecken als ein einziges, kombiniertes Becken (5) ausgebildet sind,
dass der Überlauf (10) rohrförmig so ausgebildet ist, dass seine Ansaugöffnung auf beliebige Ansaughöhen im kombinierten Becken (5) einstellbar ist, um im Bereich der Ansaugöffnung der Förderpumpe (29) stets anaerobes Verhalten des Betriebswassers gewährleisten zu können, und
dass die mit der Steigleitung (28) verbundene Sprühvorrichtung im oberen Bereich des Turms (1) angeordnet und so ausgebildet ist, dass ihre Wirksamkeit durch die im Betriebswasser enthaltenen Partikel nicht beeinträchtigbar ist.

2. Biofilterturm gemäss Anspruch 1, dadurch gekennzeichnet, dass die Sprühvorrichtung als Vollkegeldüse (15) ausgebildet ist, die oberhalb eines obersten Filterbettes (8) und etwa in der Achse des Turms (1) angeordnet ist.

3. Biofilterturm gemäss Anspruch 1, dadurch gekennzeichnet, dass die Sprühvorrichtung eine Vollkegeldüse (15) umfasst, die unterhalb eines obersten Filterbettes (41) und etwa in der Achse des Turms (1) angeordnet ist, und die zusätzlich eine gelochte Ringleitung (40) umfasst, die im obersten Filterbett (41) angeordnet ist.

4. Biofilterturm gemäss Anspruch 2 oder 3,
dadurch gekennzeichnet,
dass die Sprühöffnungen der Vollkegeldüse (15) einen Durchmesser von wenigstens 5 mm aufweisen.

5. Biofilterturm gemäss Anspruch 2 oder 3,
dadurch gekennzeichnet,
dass die Sprühöffnungen der Vollkegeldüse (15) einen Durchmesser von wenigstens 10 mm aufweisen.

6. Biofilterturm gemäss Anspruch 1,
dadurch gekennzeichnet,
dass der Überlauf (10) als beweglicher Schlauch ausgebildet ist, dessen freies Ende mit einem Seilzug (11) auf verschiedene Ansaughöhen einstellbar ist.

7. Biofilterturm gemäss Anspruch 1,
dadurch gekennzeichnet,
dass der Überlauf (10) als teleskopartig verlängerbares Rohr ausgebildet ist.

8. Biofilterturm gemäss Anspruch 1,
dadurch gekennzeichnet,
dass ein Vorratsbecken (7) für mit abbaubarem Material versehenes Wasser, eine Pumpe (30) sowie eine Regelung vorgesehen sind, durch die die Menge des umlaufenden Betriebswassers durch Einpumpen von Wasser aus dem Vorratsbecken (7) in etwa konstant haltbar ist.

9. Biofilterturm gemäss Anspruch 1,
dadurch gekennzeichnet,
dass in die Wand (3) des Turms (1) Kontrollöffnungen (9) eingelassen sind, durch die die Leerräume zwischen den Filterbetten (8, 41) kontrollierbar sind.

10. Verfahren zum Betrieb eines Biofilterturms (1) zur biologischen Abluftreinigung mit im Kreislauf geführtem Betriebswasser entsprechend einem der Ansprüche 1 bis 9,
- wobei die zu reinigende Abluft von unten so in den Turm (1) eingeführt wird, dass sie möglichst gleichförmig durch die Filterbetten (8, 41) aufsteigt,
- wobei die Menge des Betriebswassers vorwiegend durch Zufügen von Wasser, das mit im Turm (1) abbaubarem Material belastet ist, reguliert wird,
- wobei die abgesetzten Partikel des Betriebswassers und die sich in diesem anreichernden Salze aus dem kombinierten Becken (5) regelmässig abgepumpt werden,
- wobei die Verweilzeiten des Betriebswassers im kombinierten Becken (5) und im Pumpbecken (6) durch Regulierung der Menge des Betriebswassers und insbesondere durch geeignete Einstellung der Ansaughöhe im kombinierten Becken (5) so gewählt werden, dass wenigstens im Pumpbecken (6) im Bereich der Ansaugöffnung der Steigleitung (28) stets anaerobes Verhalten besteht, und
- wobei der Durchsatz des Betriebswassers durch den Turm (1) so gewählt wird, dass das Betriebswasser von Filterbett (8, 41) zu Filterbett unter ständiger Durchmischung und im Gegenstrom zur Abluft durchrieselt.

11. Verfahren nach Anspruch 10,
dadurch gekennzeichnet,
dass die Betriebsparameter insgesamt so gewählt werden, dass das Betriebswasser im Turm (1) von den Filterbetten (8, 41) jeweils bräunlich schäumend abläuft.

12. Verfahren gemäss Anspruch 10,
dadurch gekennzeichnet,
dass die Abluft ohne Vorreinigung in den Turm (1) eingeführt wird.

13. Verfahren gemäss Anspruch 10,
dadurch gekennzeichnet,
dass die Menge des Betriebswassers vorwiegend durch Zufügen von Wasser, das mit im Turm (1) abbaubarem Material belastet ist, reguliert wird.

14. Verfahren gemäss Anspruch 10,
dadurch gekennzeichnet,
dass das Betriebswasser mit einem Druck unter 1 bar, bevorzugt kleiner als 0,5 bar, in den Turm (1) eingepumpt wird.

15. Verfahren gemäss Anspruch 10,
dadurch gekennzeichnet,
dass die Abluft vor dem Eintritt in den Biofilterturm (1) und/oder das Betriebswasser im Pumpbecken (6) zum Sicherstellen günstiger Lebensbedingungen des Bakterienwuchses temperiert werden.

16. Verfahren gemäss Anspruch 10,
dadurch gekennzeichnet,
dass der Durchsatz des Betriebswassers durch den Turm (1) zur Regulierung der Dichte des auf den Tropfkörpern der Filterbetten (8, 41) aufgewachsenen Bakterienrasens variiert wird.

## Claims

1. Bio filter tower (1) for the biological exhaust air purification with the process water being circulated in a circuit, comprising
- a plurality of superposed filter beds (8, 41) carrying bacteria cultures, the beds being successively traversed from the bottom to the top by the purified air,
- a pumping basin (6), a circulating pump (29), a riser (28), and a spraying device for the supply of the process water from the pumping basin (6) to the tower (1) and its distribution on a large surface,
- a collecting basin at the lower end of the tower (1) for the process water dripping through the tower,
- a sedimentation basin for the elimination and evacuation of particles contained in the process water,
- a process water overflow from the sedimentation basin to the pumping basin (6), and
- a fresh water inlet for replacing process water escaped from the circuit,
the process water containing nutritive substances in order ensure suitable living conditions for the bacteria growth at all times,
characterised in that
- the filter beds (8, 41) are all filled with percolating filters and spaced from one another by associated empty spaces whose height is greater than the thickness of the filled filter beds (8, 41), the percolating filters allowing the growth of bacteria cultures,
- the collecting basin and the sedimentation basin are in the form of a single, combined basin (5),
- the overflow (10) is tube-shaped in such a manner that its inlet opening can be adjusted at different aspirating heights in the combined basin (5) in order to always ensure an anaerobic behaviour of the process water in the area of the inlet opening of the circulating pump (29), and in that
- the spraying device connected to the riser (28) is disposed in the upper area of the tower (1) and so designed that its effectiveness cannot be impaired by the particles contained in the process water.

2. Bio filter tower according to claim 1, characterised in that the spraying device is in the form of a full cone nozzle (15) which is disposed above an uppermost filter bed (8) and approximately in the axis of the tower (1).

3. Bio filter tower according to claim 1, characterised in that the spraying device comprises a full cone nozzle (15) which is disposed below an uppermost filter bed (41) and approximately in the axis of the tower (1), and which additionally comprises a perforated circular pipe (40) which is disposed in the uppermost filter bed (41).

4. Bio filter tower according to claim 2 or 3, characterised in that the spraying openings of the full cone nozzle (15) have a diameter of at least 5 mm.

5. Bio filter tower according to claim 2 or 3, characterised in that the spraying openings of the full cone nozzle (15) have a diameter of at least 10 mm.

6. Bio filter tower according to claim 1, characterised in that the overflow (10) is in the form of a flexible tube whose free end is adjustable at different aspirating heights by means of a cable pull (11).

7. Bio filter tower according to claim 1, characterised in that the overflow (10) is in the form of a telescopic, extensible tube.

8. Bio filter tower according to claim 1, characterised in that a storage basin (7) for water comprising degradable material, a pump (30) as well a regulating device are provided which allow to keep the amount of circulating water approximately constant by the supply of water from the storage basin (7).

9. Bio filter tower according to claim 1, characterised in that the wall (3) of the tower (1) is provided with monitoring openings (9) allowing to monitor the empty spaces between the filter beds (8, 41).

10. Method for the operation of a bio filter tower (1) according to one of claims 1 to 9 for the biological purification of exhaust air with the process water being circulated in a circuit, where
- the exhaust air to be purified is supplied to the tower (1) from below in such a manner that it ascends through the filter beds (8, 41) as uniformly as possible,
- the amount of process water is preponderantly regulated by the addition of water charged with substances which can be degraded in the tower (1),
- the settled particles of the process water and the salts concentrating in the latter are regularly pumped out of the combined basin (5),
- the dwelling times of the process water in the combined basin (5) and in the pumping basin (6) are chosen by the regulation of the amount of process water and particularly by an appropriate adjustment of the aspirating height in the combined basin (5) in such a manner that there are always anaerobic conditions in the area of the inlet opening of the riser (28) in the pumping basin (6), and
- the throughput of process water through the tower (1) is chosen such that the process water drips from filter bed (8, 41) to filter bed countercurrently to the exhaust air and is constantly mixed.

11. Method according to claim 10, characterised in that the operating parameters are altogether chosen such that the process water in the tower (1) runs from the filter beds (8, 41) in a brownish, foaming manner.

12. Method according to claim 10, characterised in that the exhaust air is supplied to the tower (1) without a previous purification.

13. Method according to claim 10, characterised in that the amount of process water is mainly regulated by the addition of water charged with substances which are degradable in the tower (1).

14. Method according to claim 10, characterised in that the process water is pumped into the tower (1) at a pressure below 1 bar, preferably below 0.5 bar.

15. Method according to claim 10, characterised in that the exhaust air is temperature-controlled before entering the bio filter tower (1) and/or the process water in the pumping basin (6) is heated in order to ensure favourable living conditions for the bacteria growth.

16. Method according to claim 9, characterised in that the throughput of the process water through the tower (1) is varied in order to regulate the density of the bacteria cultures growing on the percolating filters of the filter beds (8, 41).

## Revendications

1. Tour (1) à filtres biologiques pour la purification biologique avec l'eau de service qui circule dans un circuit, comprenant
- plusieurs lits filtrants (8, 41) superposés, porteurs de cultures de bactéria, lesquels lits sont successivement parcourus par l'air à purifier du bas vers le haut,
- un bassin de pompage (6), une pompe de circulation (29), une conduite ascendante (28) et un dispositif d'arrosage pour amener l'eau de service du bassin de pompage (6) dans la tour (1) et la distribuer sur une grande surface,
- un bassin collecteur disposé à l'extrémité inférieure de la tour (1) pour l'eau de service qui s'égoutte dans la tour,
- un bassin sédimentaire pour l'extraction et l'évacuation de particules contenus dans l'eau de service,
- un déversoir permettant le passage de l'eau de service dans le bassin sédimentaire vers le bassin de pompage (6), et
- une alimentation d'eau fraîche pour remplacer de l'eau de service ayant quitté le circuit,
l'eau de service contenant des substances nutritives afin d'assurer à tout temps des conditions de service appropriées à la croissance des bactéria,
caractérisée en ce que
- les lits filtrants (8, 41) comportent invariablement des filtres percolateurs et sont espacés l'un de l'autre par des espaces vides associés dont la hauteur est plus grande que l'épaisseur des lits filtrants (8, 41) remplis, une culture bactérienne pouvant croître sur les filtres percolateurs,
- le bassin collecteur et le bassin sédimentaire sont réalisés sous forme d'un seul bassin (5) combiné,
- le déversoir (10) est réalisé sous forme d'un tube de telle sorte que son ouverture d'aspiration est réglable à une hauteur quelconque dans ledit bassin combiné (5) afin de permettre à tout moment un comportement anaérobie de l'eau de service dans le domaine de l'ouverture d'aspiration de la pompe de circulation (29), et que
- le dispositif d'arrosage relié à ladite conduite ascendante (28) est disposé dans le domaine supérieur de la tour (1) et présente une telle forme que son efficacité n'est pas susceptible d'être affectée par les particules contenus dans l'eau de service.

2. Tour à filtres biologiques selon la revendication 1, caractérisée en ce que le dispositif d'arrosage est réalisé sous forme d'une buse (15) à cône plein, disposée au-dessus du lit filtrant supérieur (8) et approximativement dans l'axe de la tour (1).

3. Tour à filtres biologiques selon la revendication 1, caractérisée en ce que le dispositif d'arrosage comprend une buse à cône plein (15) disposée en-dessous d'un lit filtrant supérieur (41) et approximativement dans l'axe de la tour (1), et qui comporte en plus une conduite annulaire (40) perforée, disposée dans le lit filtrant supérieur (41).

4. Tour à filtres biologiques selon la revendication 2 ou 3, caractérisée en ce que les ouvertures d'arrosage de la buse à cône plein (15) présentent un diamètre de 5 mm au moins.

5. Tour à filtres biologiques selon la revendication 2 ou 3, caractérisée en ce que les ouvertures d'arrosage de la buse à cône plein (15) présentent un diamètre de 10 mm au moins.

6. Tour à filtres biologiques selon la revendication 1, caractérisée en ce que ledit déversoir (10) est réalisé sous forme d'un tuyau flexible dont l'extrémité libre est réglable à différentes hauteurs d'aspiration au moyen d'un tirant à câble.

7. Tour à filtres biologiques selon la revendication 1, caractérisée en ce que ledit déversoir (10) est réalisé sous forme d'un tuyau à rallonge télescopique.

8. Tour à filtres biologiques selon la revendication 1, caractérisée en ce qu'un bassin réservoir (7) pour de l'eau contenant des matières décomposables, une pompe (30) et un réglage sont prévus afin de stabiliser approximativement la quantité d'eau de service circulante en alimentant de l'eau dudit bassin réservoir (7).

9. Tour à filtres biologiques selon la revendication 1, caractérisée en ce que la paroi (3) de la tour (1) est pourvue d'ouvertures de contrôle (9) permettant de contrôler lesdits espaces vides entres les lits filtrants (8, 41).

10. Procédé pour l'exploitation d'une tour à filtres biologiques (1) selon l'une des revendications 1 à 9 pour la purification biologique d'air d'échappement avec l'eau de service circulant dans un circuit, dans lequel
- l'air d'échappement est alimenté à la tour (1) depuis le bas de telle sorte qu'il monte à travers les lits filtrants (8, 41) d'une manière aussi uniforme que possible,
- la quantité d'eau de service est réglée en premier lieu par l'addition d'eau chargée de matières décomposables dans la tour (1),
- les particules déposés de l'eau de service et les sels s'enrichissant dans celle-ci sont régulièrement évacués dudit bassin combiné (5),
- les temps de séjour de l'eau de service dans ledit bassin combiné (5) et dans ledit bassin de pompage (6) sont choisis, par l'intermédiaire du réglage de la quantité d'eau de service et particulièrement par un réglage approprié de la hauteur d'aspiration dans ledit bassin combiné (5), de telle manière qu'il y a toujours des conditions anaérobies au moins dans le domaine de l'ouverture d'aspiration de ladite conduite ascendante (28) dans le bassin de pompage (6), et
- le débit de l'eau de service dans la tour (1) est choisi de telle manière que l'eau de service ruisselle d'un lit filtrant (8, 41) à l'autre en se mélangeant constamment et en direction contraire au flux de l'air d'échappement.

11. Procédé selon la revendication 10, caractérisé en ce que dans l'ensemble, les paramètres de fonctionnement sont choisis de telle manière que l'eau de service dans la tour (1) présente un couleur brunâtre et s'écoule des lits filtrants (8, 41) en moussant.

12. Procédé selon la revendication 10, caractérisé en ce que l'air d'échappement est alimenté à la tour (1) sans purification préalable.

13. Procédé selon la revendication 10, caractérisé en ce que la quantité d'eau de service est réglée en premier lieu par l'addition d'eau chargée de matières décomposables dans la tour (1).

14. Procédé selon la revendication 10, caractérisé en ce que l'eau de service est pompée dans la tour (1) à une pression inférieure à 1 bar, préférablement inférieure à 0,5 bar.

15. Procédé selon la revendication 10, caractérisé en ce que l'air d'échappement est tempéré avant l'entrée dans la tour à filtres biologiques (1) et/ou l'eau de service dans le bassin de pompage (6) est tempérée afin d'assurer des conditions de vie favorables à la croissance bactérienne.

16. Procédé selon la revendication 9, caractérisé en ce que le débit de l'eau de service dans la tour (1) est varié afin de régler la densité des cultures bactériennes qui poussent sur les filtres percolateurs des lits filtrants (8, 41).
